(19) **Europäisches Patentamt**

**European Patent Office**

**Office européen des brevets**

(11) **EP 0 766 067 B1**

(12) **EUROPÄISCHE PATENTSCHRIFT**

(45) Veröffentlichungstag und Bekanntmachung des Hinweises auf die Patenterteilung:
**26.09.2001   Patentblatt 2001/39**

(51) Int Cl.7: **G01D 5/38**

(21) Anmeldenummer: **96106320.3**

(22) Anmeldetag: **23.04.1996**

(54) **Vorrichtung zur mehrdimensionalen Messung von Positionen oder Positionsänderungen**

Device for multi-dimensional measurement of positions or changes in position

Dispositif de mesure multidimensionnelle d'un position ou d'un changement de position

(84) Benannte Vertragsstaaten:
**DE FR GB IT**

(30) Priorität: **28.09.1995   DE 19536039**

(43) Veröffentlichungstag der Anmeldung:
**02.04.1997   Patentblatt 1997/14**

(73) Patentinhaber: **ROBERT BOSCH GMBH**
**70442 Stuttgart (DE)**

(72) Erfinder:
• **Schilling, Ulrich, Dipl.-Ing.**
  **70567 Stuttgart (DE)**
• **Steinlechner, Siegbert, Dipl.-Ing.**
  **71229 Leonberg (DE)**
• **Drabarek, Pawel, Ing.**
  **75233 Tiefenbronn-Muehlhausen (DE)**
• **Streibl, Norbert, Dr.rer.nat.**
  **71229 Leonberg (DE)**

(56) Entgegenhaltungen:
WO-A-89/12799          WO-A-91/04460
DE-A- 4 317 064

• **PATENT ABSTRACTS OF JAPAN vol. 9, no. 144 (P-365) [1867] , 19.Juni 1985 & JP-A-60 024414 (YOKOKAWA HOKUSHIN DENKI K.K.), 7.Februar 1985,**

# EP 0 766 067 B1

## Beschreibung

Die Erfindung bezieht sich auf eine Vorrichtung zur mehrdimensionalen Messung von Positionen oder Positionsänderungen eines Teils mit einer optischen Messanordnung, bei der ein auf dem Teil angeordneter Hologramm-Maßstab von einer Strahlungserzeugungseinrichtung mit den Messdimensionen zugeordneten Messwellen bestrahlt und die von dem Hologramm-Maßstab gebeugte und/oder reflektierte und mit einer jeweiligen Referenzwelle interferierte Strahlung zur Auswertung von einer Sensoreinrichtung aufgenommen ist, wobei für die verschiedenen Messdimensionen in der Sensoreinrichtung ein gemeinsamer Sensor oder eine gemeinsame Sensorgruppe vorgesehen ist, mit dem bzw. der eine von der interferierten Strahlung gebildete Empfangswelle aufgenommen ist, und wobei die Trennung der verschiedenen Messdimensionen in einer Auswerteeinrichtung der Sensoreinrichtung elektrisch erfolgt.

Eine derartige Vorrichtung ist in der WO 91/04460 angegeben. Die WO 91/ 04460 zeigt eine Vorrichtung zur absoluten zweidimensionalen Positionsmessung eines Teils in Bezug auf eine Messanordnung, bei der auf der Oberfläche des Teils ein Hologramm vorgesehen ist. Die im Hologramm enthaltende Information wird mit einer Messwelle, die auf das Hologramm gerichtet und dort diffraktiert wird, durch Interferenz mit einer Referenzwelle ausgelesen. Die interferierten Wellen werden von einer optischen Sensoranordnung aufgenommen und in einer Auswerteeinrichtung ausgewertet. Bei einem Ausführungsbeispiel wird die Messung zeitlich aufeinander folgend mit zwei Mess- und zwei Referenzwellen mit unterschiedlicher Wellenlänge vorgenommen, zwischen denen in vorgebbaren zeitlichen Abständen umgeschaltet wird. In einem ersten Zeitabschnitt wird die Wellenlänge für die Positionsmessung in der einen und in einem nächsten Zeitabschnitt die Wellenlänge für die Positionsmessung in der anderen Messrichtung erzeugt. Die getrennte Auswertung der den beiden Messrichtungen in den verschiedenen Zeitabschnitten zugeordneten Wellenlängen wird in der Auswerteeinrichtung vorgenommen.

Eine weitere Vorrichtung zur mehrdimensionalen Messung von Positionen ist in der DE 43 17 064 A1 angegeben. Bei dieser bekannten Vorrichtung wird die Position eines Teils, auf dem ein Hologramm-Maßstab fest angeordnet ist, in Bezug auf eine Messwelle erfasst, wobei die an dem Hologramm-Maßstab gebeugte Messwelle mit einer Referenzwelle zur Interferenz gebracht und die interferierte Strahlung von einer Sensoreinrichtung aufgenommen und hinsichtlich der Phasenbeziehungen ausgewertet wird. In dieser Druckschrift ist als wesentliches Beispiel für ein Messverfahren die Heterodyn-Technik beschrieben. Wie die zwei Dimensionen unterschieden werden, ist im Einzelnen nicht angegeben. Üblich ist aber, wie z.B. in der EP 491 749 im Zusammenhang mit der optischen Messung von Oberflächenstrukturen durch Phasendifferenzmessung vorgeschlagen, für jede Dimension Wellen unterschiedlicher Wellenlängen zu verwenden, die mittels jeweils zugeordneter Sensoren oder Sensorgruppen separat ausgewertet werden. Mit dieser Art der Strahlungserfassung und Auswertung ist ein entsprechend hoher Aufwand insbesondere bezüglich der optischen Einrichtung verbunden.

## Vorteile der Erfindung

Der Erfindung liegt die Aufgabe zugrunde, eine Vorrichtung der eingangs erwähnten Art bereitzustellen, mit der eine mehrdimensionale Positionsmessung bei relativ einfachem Aufbau zuverlässig durchführbar ist.

Diese Aufgabe wird mit den im Patentanspruch **1** angegebenen Merkmalen gelöst. Die Vorrichtung ist hiernach also weiterhin derart ausgebildet, dass die von der Strahlungserzeugungseinrichtung für die verschiedenen Messdimensionen abgegebene Strahlung gleiche Grundwellenlänge hat, die mittels heterodyninterferometrischer Maßnahmen in den verschiedenen Messdimensionen mit unterschiedlichen Frequenzen moduliert ist, und dass in der Auswerteeinrichtung die unterschiedlichen Messdimensionen aufgrund der unterschiedlichen Modulationsfrequenzen und der damit erzeugten unterschiedlichen Intensitätsschwankungen der Empfangswelle unterscheidbar ist. In den verschiedenen Messdimensionen braucht lediglich eine unterschiedliche Heterodyn-Frequenz bzw. Modulationsfrequenz gewählt zu werden, die dann in der einzigen Empfangswelle als Information für die verschiedenen Dimensionen vorhanden ist und in der Auswerteeinrichtung der Sensoreinrichtung die getrennte Auswertung der in den verschiedenen Dimensionen auftretenden Phasenbeziehungen ermöglicht, die sich in den Intensitätsänderungen der Empfangswelle und der daraus gebildeten Sensorsignale ausdrücken. Bezüglich näherer Einzelheiten zu der Heterodyn-Technik sei auf die eingangs genannte DE 43 17 064 A1 sowie auf die darin zitierte weiterführende Literatur verwiesen.

Ein vorteilhafter Aufbau besteht weiterhin darin, daß die Strahlungserzeugungseinrichtung eine einzige schmalbandige Lichtquelle aufweist. Dadurch erübrigen sich separate Lichtquellen für die verschiedenen Dimensionen, so daß auch auf der Eingangsseite der Aufbau einfach ist und Abweichungen, die von verschiedenen Bauteilen herrühren können, ausgeschlossen sind. Als Lichtquelle eignet sich insbesondere eine frequenzmodulierte Laserdiode.

Die Vorrichtung läßt sich vorteilhaft bei einem berührungslosen Triaxialaufnehmer zur Messung dreidimensionaler Schwingungen verwenden. Hierbei kann für die dritte Dimension (z-Richtung) beispielsweise eine Art Michelson-Interferometer verwendet werden, wie es an sich bekannt ist. Dabei ist vorteilhaft vorgesehen, daß zur Messung in der x-y-Ebene die gebeugte Strahlung und zur Messung in z-Richtung die reflektierte Strahlung herangezogen wird.

Die Erfindung wird nachfolgend anhand eines Ausführungsbeispiels unter Bezugnahme auf die Zeichnungen näher erläutert. Es zeigen:

**Fig. 1**   eine schematische Darstellung einer Vorrichtung zur mehrdimensionalen Messung von Positionen oder Positionsänderungen und

Fig. 2   eine perspektivische Darstellung, bei der die Zuordnung der in Figur 1 gezeigten Wellen zu den verschiedenen Meßdimensionen ersichtlich ist.

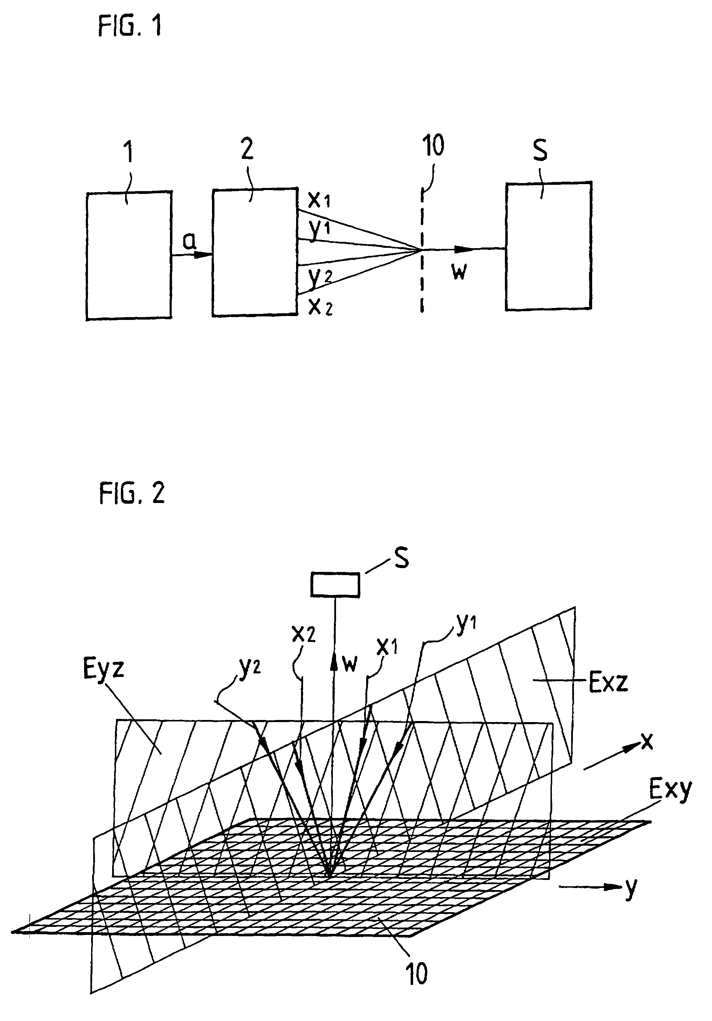

Wie in Fig. 1 gezeigt, wird eine von einer Strahlungserzeugungseinrichtung 1 abgegebene Strahlung a in einer Strahlformereinrichtung 2 in Meßwellen $x_2$, $y_2$ und Referenzwellen $x_1$, $y_1$ übergeführt, die an einen gemeinsamen Punkt eines Hologramm-Maßstabs 10 gelenkt werden und dort gebeugt, als eine gemeinsame Empfangswelle w weitergeleitet werden. Die Empfangswelle w wird von einer Sensoreinrichtung S mit einem einzigen Sensor oder einer einzigen Sensorgruppe aufgenommen und mittels einer Auswerteeinrichtung weiterverarbeitet, um die Position bzw. Positionsänderung des Teils, auf dem der Hologramm-Maßstab aufgebracht ist, zu erfassen. Die Referenzwelle $x_1$ und die Meßwelle $x_2$ sind dabei, wie aus Fig. 2 ersichtlich, einer zur Meßebene Exy senkrechten Ebene Exz zugeordnet, während die Referenzwelle $y_1$ und die Meßwelle $y_2$ einer zu der Ebene Exy und zur Ebene Exz senkrechten Ebene Eyz zugeordnet sind. Hierbei kann die Empfangswelle w, wie in den Figuren 1 und 2 alternativ gezeigt, je nach für eine jeweilige Situation geeignetem Meßaufbau aus in Transmission oder in Reflexion gebeugter Strahlung gebildet sein.

Wie in Fig. 1 schematisch dargestellt, können die verschiedenen Meß- bzw. Referenzwellen $x_1$, $x_2$, $y_1$, $y_2$ aus einer einzigen Strahlungsquelle abgeleitet werden, die zum Beispiel eine schmalbandige Lichtquelle in Form einer Laserdiode ist. Wie in der Phaseninterferometrie üblich, wird die Referenzwelle in der Phase oder Frequenz moduliert, wobei die Modulationsfrequenz zum Beispiel zwischen einem KHz und hundert MHz liegen kann. Die Modulation wird, wie in der eingangs genannten DE 43 17 064 A1 erläutert, mit der Heterodyn-Technik vorgenommen. In der DE 43 17 064 A1 sind diesbezüglich weitere Literaturstellen genannt, auf die hinsichtlich näherer Einzelheiten hingewiesen sei.

Beim Verschieben des Hologramm-Maßstabs 10 um einen Weg x bzw. y bezüglich der Meßwellen $x_2$ bzw. $y_2$ ändert sich an einer bestimmten Stelle der Wellenfront der gebeugten Strahlung die Phasenlage und damit auch die Phasendifferenz der gebeugten Meßwellen bezüglich der entsprechenden Referenzwellen $x_1$ bzw $y_1$. Wegen der Interferenz der Meßwellen und der Referenzwellen ändert sich aufgrund der Änderung der Phasenlage auch die Intensität der Empfangswelle w, die von der gebeugten und interferierten Strahlung gebildet wird. Ensprechend der Intensitätsänderungen ändert sich auch das Ausgangssignal des Sensors bzw. der Sensorgruppe der Sensoreinrichtung S, die die Empfangswelle w aufnimmt.

Die verschiedenen Meßdimensionen werden dadurch erfaßbar, daß die Modulationsfrequenzen der Phasen- oder Frequenzmodulation in den verschiedenen Meßdimensionen unterschiedlich gewählt sind. Dadurch können die Ausgangssignale des einzigen Sensors bzw. der einzigen Sensorgruppe hinsichtlich der verschiedenen Meßdimensionen elektrisch separiert werden. Dadurch wird die Sensoreinrichtung mit dem einzigen Sensor bzw. der einzigen Sensorgruppe und der Auswerteeinrichtung im Aufbau einfach, und die Verarbeitung der von den verschiedenen Meßdimensionen erhaltenen Signale wird mit der gleichen Verarbeitungseinrichtung vorgenommen, wodurch diesbezügliche Meßfehler minimiert werden.

Auf der Eingangsseite können die Meßwellen $x_2$, $y_2$ und die Referenzwellen $x_1$, $y_1$ von einer frequenzmodulierten Laserdiode abgeleitet werden, wodurch auch eingangsseitig die Vorrichtung einfach und in der Funktion zuverlässig aufgebaut ist. Die benötigten Heterodyn-Frequenzen lassen sich hierbei in einfacher Weise durch verschieden lange optische Wege realisieren.

Abhängig von der Gestaltung des Hologramm-Maßstabs 10 und der Sensorgruppe läßt sich die Vorrichtung sowohl zur inkrementalen als auch zur absoluten Wegmessung einsetzen; die Messung kann jedoch auch mit rauhen Oberflächen erfolgen.

Für das von dem Sensor bzw. der Sensorgruppe detektierte Intensitätssignal, das sich bei der in Figur 2 gezeigten Überlagerung der vier Wellen $x_1$, $x_2$, $y_1$ und $y_2$ mit $A_{x1} = a_{x1} \cdot \cos(\omega_{x1} t + \varphi_{x1})$, $A_{x2} = a_{x2} \cdot \cos(\omega_{x2} \cdot t + \varphi_{x2})$, $A_{y1} = a_{y1} \cdot \cos(\omega_{y1} t + \varphi_{y1})$ und $A_{y2} = a_{y2} \cos(\omega_{y2} \cdot t + \varphi_{y2})$ ergibt, erhält man:

$$I = \tfrac{1}{2}(a_{x1}^2 + a_{x2}^2 + a_{y1}^2 + a_{y2}^2) + a_{x1}a_{x2} \cdot \cos[(\omega_{x1} - \omega_{x2})t + \varphi_{x1} - \varphi_{x2}] + a_{x1}a_{y1} \cdot \cos[(\omega_{x1} - \omega_{y1})t + \varphi_{x1} - \varphi_{y1}]$$

$$+ a_{x1}a_{y2} \cdot \cos[(w_{x1} - \omega_{y2})t + \varphi_{x1} - \varphi_{y2}] + a_{x2}a_{y1} \cdot \cos[(\omega_{x2} - \omega_{y1})t + \varphi_{x2} - \varphi_{y1}]$$

$$+ a_{x2}a_{y2} \cdot \cos[(\omega_{x2} - \omega_{y2})t + \varphi_{x2} - \varphi_{y2}] + a_{y1}a_{y2} \cdot \cos[(\omega_{y1} - \omega_{y2})t + \varphi_{y1} - \varphi_{y2}]$$

Insgesamt treten hierbei also 6 Heterodyn-Signale mit den Heterodyn-Frequenzen $\omega_{x1} - \omega_{x2}$, $\omega_{x1} - \omega_{y1}$, $\omega_{x1} - \omega_{y2}$, $\omega_{x2} - \omega_{y1}$, $\omega_{x2} - \omega_{y2}$ und $\omega_{y1} - \omega_{y2}$ auf, die sich in der Auswerteeinrichtung bei geeigneter Wahl elektrisch trennen lassen.

Eine schmalbandige Lichtquelle kann eingesetzt werden, da sich die im System zur Messung benutzten Wellenlängen nur geringfügig unterscheiden (bei Heterodyn-Frequenzen im Bereich einiger MHz ist $\delta\lambda/\lambda \approx 10^{-9}$).

Ein wichtiger Anwendungsfall für die Vorrichtung besteht außer für die in Figur 2 gezeigte zweidimensionale Postitionsmessung in der dreidimensionalen Schwingungsmessung, wobei zur Erfassung der Position bzw. Positionsänderung in der zur Ebene Exy senkrechten z-Richtung eine Art Michelson-Interferometer günstig ist, wie es an sich bekannt ist.

## Patentansprüche

1. Vorrichtung zur mehrdimensionalen Messung von Positionen oder Positionsänderungen eines Teils mit einer optischen Messanordnung, bei der ein auf dem Teil angeordneter Hologramm-Maßstab von einer Strahlungserzeugungseinrichtung mit den Messdimensionen zugeordneten Messwellen bestrahlt und die von dem Hologramm-Maßstab gebeugte und/oder reflektierte und mit einer jeweiligen Referenzwelle interferierte Strahlung zur Auswertung von einer Sensoreinrichtung aufgenommen ist, wobei für die verschiedenen Messdimensionen in der Sensoreinrichtung ein gemeinsamer Sensor oder eine gemeinsame Sensorgruppe vorgesehen ist, mit dem bzw. der eine von der interferierten Strahlung gebildete Empfangswelle aufgenommen ist, und wobei die Trennung der verschiedenen Messdimensionen in einer Auswerteeinrichtung der Sensoreinrichtung elektrisch erfolgt, **dadurch gekennzeichnet**,

   dass die von der Strahlungserzeugungseinrichtung (1) für die verschiedenen Messdimenisonen (x,y,z) abgegebene Strahlung (a) gleiche Grundwellenlänge hat, die mittels einer heterodyn-interferometrischen Anordnung mit einer in den verschiedenen Messdimensionen (x,y,z) unterschiedlichen Frequenz moduliert ist, und dass in der Auswerteeinrichtung die unterschiedlichen Messdimensionen (x,y,z) aufgrund der unterschiedlichen Modulationsfrequenzen und der damit erzeugten unterschiedlichen Intensitätsschwankungen der Empfangswelle (w) unterscheidbar ist.

2. Vorrichtung nach Anspruch 1,
   **dadurch gekennzeichnet,**
   **dass** die Strahlungserzeugungseinrichtung (1) eine einzige schmalbandige Lichtquelle aufweist.

3. Vorrichtung nach einem der vorhergehenden Ansprüche,
   **dadurch gekennzeichnet,**
   **dass** die Strahlungserzeugungseinrichtung (1) eine frequenzmodulierte Laserdiode aufweist.

4. Verwendung der Vorrichtung nach einem der vorhergehenden Ansprüche bei einem berührungslosen Triaxialaufnehmer zur Messung dreidimensionaler Schwingungen.

5. Verwendung nach Anspruch 4,
   **dadurch gekennzeichnet,**
   **dass** zur Messung in der x-y-Ebene die gebeugte Strahlung und zur Messung in z-Richtung die reflektierte Strahlung herangezogen wird.

## Claims

1. Device for multi-dimensional measurement of positions or changes in position of a part with the aid of an optical measuring arrangement, in the case of which a hologram scale arranged on the part is irradiated by a radiation-producing device with the aid of measuring waves assigned to the measurement dimensions, and the radiation diffracted by the hologram scale and/or reflected and subjected to interference from a respective reference wave is picked up for the purpose of evaluation by a sensor device, there being provided for the various measurement dimensions in the sensor device a common sensor or a common sensor group with the aid of which a received wave formed by the interfered radiation is picked up, and the separation of the various measurement dimensions being performed electrically in an evaluation device of the sensor device, **characterized in that** the radiation (a) emitted by the radiation-producing device (1) for the various measurement dimensions (x,y,z) has the same fundamental wavelength, which is modulated by means of a heterodyne interferometric arrangement with a different frequency in the various measurement dimensions (x,y,z), and in that the different measurement dimensions (x,y,z) can be distinguished in the evaluation device on the basis of the different modulation frequencies and the different intensity fluctuations, produced thereby, in the received wave (w).

2. Device according to Claim 1, **characterized in that** the radiation-producing device (1) has a single narrowband light source.

3. Device according to one of the preceding claims, **characterized in that** the radiation-producing device (1) has a frequency-modulated laser diode.

4. Use of the device according to one of preceding claims in the case of a contactless triaxial pick-up for measuring three-dimensional oscillations.

5. Use according to Claim 4, **characterized in that** the diffracted radiation is used for measurement in the x-y plane, and the reflected radiation is used for measurement in the z-direction.


**Revendications**

1. Dispositif de mesure multidimensionnelle des positions ou variations de positions d'une pièce à l'aide d'un dispositif de mesure optique, dispositif selon lequel on éclaire une échelle de mesure holographique montée sur la pièce avec une installation générant un rayonnement, avec des ondes de mesure associées aux dimensions de mesure, et une installation de capteur reçoit le rayonnement diffracté et/ou réfléchi par l'échelle de mesure holographique, et interféré avec une onde de référence respective, pour exploiter ce signal,

   un capteur commun ou groupe commun de capteurs étant prévu dans l'installation de capteur pour différentes dimensions de mesure, ce capteur ou ce groupe de capteurs recevant l'onde de réception formée par le rayonnement d'interférence, et
   la séparation des différentes dimensions de mesure se fait électriquement dans une installation d'exploitation de l'installation de capteur,

   **caractérisé en ce que**

   le rayonnement (a) émis par l'installation générant le rayonnement (1) pour les différentes dimensions de mesure (x, y, z) a la même longueur d'onde de base qui est modulée par l'intermédiaire d'un dispositif interférométrique hétérodyne, avec une fréquence différente dans les différentes dimensions de mesure (x, y, z), et l'installation d'exploitation distingue les différentes dimensions de mesure (x, y, z) du fait des fréquences de modulation différentes et des variations d'intensité différentes ainsi engendrées dans l'onde de réception (w).

2. Dispositif selon la revendication 1,
   **caractérisé en ce que**
   l'installation générant le rayonnement (1) comprend une unique source lumineuse à bande étroite.

3. Dispositif selon l'une quelconque des revendications précédentes,
   **caractérisé en ce que**
   l'installation générant le rayonnement (1) comporte une diode laser modulée en fréquence.

4. Application du dispositif selon l'une quelconque des revendications précédentes pour un capteur triaxial fonctionnant sans contact et permettant de mesurer des oscillations tridimensionnelles.

5. Application du dispositif selon la revendication 4,
   **caractérisée en ce que**
   le rayonnement diffracté est utilisé pour la mesure dans le plan (x-y) et le rayonnement réfléchi est utilisé pour la direction de mesure (z).

FIG. 1

FIG. 2